# EUROPÄISCHE PATENTANMELDUNG

(11) **EP 4 404 638 A1**
(43) Veröffentlichungstag der Anmeldung: **24.07.2024**
(21) Anmeldenummer: 23219636.0
(22) Anmeldetag: 22.12.2023
(51) Int. Cl.: H04W 52/02, E06B 9/68, H04L 12/12, H04L 12/28

(54) **VERFAHREN ZUM BETREIBEN EINER ERSTEN EINHEIT EINER HEIMAUTOMATISIERUNGSANORDNUNG**

(30) Priorität: 18.01.2023 DE 102023101186
(71) Anmelder: DELTA DORE RADEMACHER GmbH, 46414 Rhede (DE)
(72) Erfinder: Burdack, Frank, 46397 Bocholt (DE); Klein-Hitpaß, Nils, 46414 Rhede (DE)
(74) Vertreter: Gottschald Patentanwälte Partnerschaft mbB

(57) **Zusammenfassung**

Die Erfindung betrifft ein Verfahren zum Betreiben einer ersten Einheit (2) einer Heimautomatisierungsanordnung (1), wobei die erste Einheit (2) einen Betriebsmodus (15) und einen Energiesparmodus (16) aufweist, in welchem die erste Einheit (2) weniger Energie verbraucht als im Betriebsmodus (15), wobei die erste Einheit (2) aus dem Energiesparmodus (16) durch ein Aufwecksignal (17) in den Betriebsmodus (15) überführbar ist, wobei die erste Einheit (2) einen Transceiver (6), einen Prozessor (7) und einen Aktuator (8) und/oder Sensor (9) aufweist, wobei die erste Einheit (2) im Energiesparmodus (16) wiederkehrend, insbesondere zyklisch, in Lauschperioden (18) prüft, ob ein ankommendes drahtloses Signal eine vordefinierte Signalstärke überschreitet, wobei, sofern das ankommende drahtlose Signal eine vordefinierte Signalstärke überschreitet, die erste Einheit (2) prüft, ob eine definierte Signalfolge gemäß dem Aufwecksignal (17) detektiert wird, und, sofern die definierte Signalfolge gemäß dem Aufwecksignal (17) detektiert wird, prüft, ob ein Synchronisationsfeld (21) detektiert wird, und, sofern ein Synchronisationsfeld (21) in detektiert wird, die erste Einheit (2) in den Betriebsmodus (15) wechselt, um eine Nachricht (10) zu verarbeiten.

## Beschreibung

Die vorliegende Erfindung betrifft ein Verfahren zum Betreiben einer ersten Einheit einer Heimautomatisierungsanordnung gemäß Anspruch 1, eine erste Einheit für eine Heimautomatisierungsanordnung gemäß Anspruch 12 sowie eine Heimautomatisierungsanordnung gemäß Anspruch 15.

Grundsätzlich sind verschiedene Verfahren zum Betreiben von Heimautomatisierungsanordnungen bekannt. Heimautomatisierungsanordnungen weisen in der Regel mehrere Einheiten auf. Dies können beispielsweise Rollladenantriebseinheiten, Sensoreinheiten und/oder Fernbedienungen sein. Die Kommunikation zwischen den verschiedenen Einheiten kann mittels unterschiedlicher Protokolle erfolgen. Zigbee ist ein gängiges Protokoll, einige Hersteller verwenden jedoch zum Beispiel auch proprietäre Protokolle. Insbesondere wenn eine Einheit batteriebetrieben oder solarbetrieben ist, ist der Stromverbrauch dieser Einheit von hoher Bedeutung. Darum weisen diese in der Regel einen Energiesparmodus auf, in dem sie zwar weniger Energie verbrauchen, aber auch nicht immer für alle Einheiten des Netzwerks sofort erreichbar sind. Gleichzeitig sind jedoch auch schnelle Reaktionszeiten wünschenswert, da eine Einheit zügig auf eine Nachricht, insbesondere einen Befehl, reagieren soll.

Beispielsweise ist es, um den Energieverbrauch einer Einheit zu reduzieren, bekannt, dass eine Einheit in einem festen Rhythmus bei einer anderen Einheit nachfragt, ob für sie Nachrichten, insbesondere Befehle, vorliegen. In der Zeit zwischen zwei Nachfragen, kann es sich in einen Energiesparmodus begeben. Nachteilig hieran ist insbesondere, dass die Reaktionszeit und der Energieverbrauch direkt von der Frequenz, mit der die Einheit bei der anderen Einheit nachfragt, ob eine Nachricht vorliegt, abhängen und diese sich wechselweise negativ beeinflussen.

Der bekannte Stand der Technik, von dem die Erfindung ausgeht, betrifft ein Verfahren gemäß Anspruch 1.

Es ist dabei eine Herausforderung, den bekannten Stand der Technik zu verbessern.

Der Erfindung liegt das Problem zugrunde, das bekannte Verfahren derart auszugestalten und weiterzubilden, dass hinsichtlich der genannten Herausforderung eine weitere Optimierung erreicht wird.

Das obige Problem wird durch die Merkmale von Anspruch 1 gelöst.

Wesentlich ist die grundsätzliche Überlegung, die erste Einheit, welche einen Betriebsmodus und einen Energiesparmodus aufweist, mittels eines Aufwecksignal aufzuwecken und dabei eine mehrstufige Prüfung der ankommenden Signale vorzusehen, um den Wechsel der ersten Einheit von dem Energiesparmodus in den Betriebsmodus zu bewirken oder nicht zu bewirken. Durch die mehrstufige Prüfung können unnötige Wechsel in den Betriebsmodus aufgrund von ankommenden Signalen vermieden und auf diese Weise Energie gespart werden.

Im Einzelnen wird ein Verfahren zum Betreiben einer ersten Einheit einer Heimautomatisierungsanordnung vorgeschlagen, wobei die erste Einheit einen Betriebsmodus und einen Energiesparmodus aufweist, in welchem die erste Einheit weniger Energie verbraucht als im Betriebsmodus. Die erste Einheit ist aus dem Energiesparmodus durch ein Aufwecksignal in den Betriebsmodus überführbar und weist einen Transceiver, einen Prozessor auf. Ferner ist ein Aktuator und/oder Sensor vorgesehen.

Die erste Einheit prüft im Energiesparmodus wiederkehrend, insbesondere zyklisch, in Lauschperioden, ob ein ankommendes drahtloses Signal eine vordefinierte Signalstärke überschreitet. Sofern das ankommende drahtlose Signal eine vordefinierte Signalstärke überschreitet, prüft die erste Einheit, ob eine definierte Signalfolge gemäß dem Aufwecksignal, insbesondere in einem definierten Zeitraum, detektiert wird. Sofern die definierte Signalfolge gemäß dem Aufwecksignal, insbesondere in dem definierten Zeitraum, detektiert wird, prüft die erste Einheit, ob ein Synchronisationsfeld, insbesondere in einem definierten Zeitraum, detektiert wird. Sofern ein Synchronisationsfeld, insbesondere in dem definierten Zeitraum, detektiert wird, wechselt die erste Einheit in den Betriebsmodus, um eine Nachricht zu verarbeiten.

Gemäß der Weiterbildung nach Anspruch 2 führt der Transceiver einen oder mehrere der Stufen der Prüfung im Energiesparmodus durch. Hierdurch lässt sich ein besonders niedriger Energieverbrauch realisieren.

Der Anspruch 3 beschreibt bevorzugte Ausgestaltungen hinsichtlich des Abbruchs der Prüfung, wenn Stufen der Prüfung nicht das gewünschte Ergebnis ergeben. Auch hierdurch kann der Energieverbrauch der ersten Einheit im Energiesparmodus verbessert werden.

In den Ansprüchen 4 bis 7 sind bevorzugte weitere Ausgestaltungen des Verfahrens beschrieben, welche ein besonders energiesparendes weiteres Prüfen und/oder Verarbeiten einer empfangenen Nachricht bzw. eine zügige Rückkehr aus dem Betriebsmodus in den Energiesparmodus ermöglichen.

In den Ansprüchen 8 bis 11 ist eine bevorzugte Einbindung der ersten Einheit in ein Heimautomatisierungsnetzwerk und/oder eine Heimautomatisierungsanordnung beschrieben.

Nach einer weiteren Lehre gemäß Anspruch 12, der eigenständige Bedeutung zukommt, wird eine Einheit für eine Heimautomatisierungsanordnung mit einem Betriebsmodus und einem Energiesparmodus beansprucht.

Diese ist vorzugsweise dazu ausgebildet und eingerichtet, als erste Einheit das zuvor beschriebene Verfahren durchzuführen. Auf alle Ausführungen zu dem vorschlagsgemäßen Verfahren darf verwiesen werden.

In den Ansprüchen 13 und 14 sind besonders bevorzugte Ausgestaltungen der ersten Einheit beschrieben, für welche der geringe Energiebedarf, insbesondere bei Verwendung des vorschlagsgemäßen Verfahrens, besonders vorteilhaft ist.

Nach einer weiteren Lehre gemäß Anspruch 15, der ebenfalls eigenständige Bedeutung zukommt, wird eine Heimautomatisierungsanordnung zur Durchführung eines Verfahrens nach einem der Ansprüche 1 bis 11 und/oder mit einer ersten Einheit nach einem der Ansprüche 12 bis 14 beansprucht.

Auf alle Ausführungen zu dem vorschlagsgemäßen Verfahren und der vorschlagsgemäßen Einheit darf verwiesen werden.

Im Folgenden wird die Erfindung anhand einer lediglich Ausführungsbeispiele darstellenden Zeichnung näher erläutert. In der Zeichnung zeigt
- Fig. 1: ein Ausführungsbeispiel einer vorschlagsgemäßen Heimautomatisierungsanordnung mit einer vorschlagsgemäßen ersten Einheit zur Durchführung des vorschlagsgemäßen Verfahrens,
- Fig. 2: ein Ausführungsbeispiel zur Durchführung des vorschlagsgemäßen Verfahrens,
- Fig. 3: ein weiteres Ausführungsbeispiel zur Durchführung des vorschlagsgemäßen Verfahrens,
- Fig. 4: ein Ausführungsbeispiel des Aufweckens der ersten Einheit aus Fig. 1 durch ein Aufwecksignal und
- Fig. 5: ein Ausführungsbeispiel zur Herstellung einer Parent-Child-Verbindung.

In den Figuren ist eine vorschlagsgemäße Heimautomatisierungsanordnung 1 mit einer vorschlagsgemäßen ersten Einheit 2, einer zweiten Einheit 3 und einer dritten Einheit 4 zur Durchführung des vorschlagsgemäßen Verfahrens gezeigt.

Hier sind die erste Einheit 2 und die zweite Einheit miteinander gepairt. Zusätzlich oder alternativ können die erste Einheit 2 und die zweite Einheit demselben Heimautomatisierungsnetzwerk 5 angehören.

Die erste Einheit 2 weist hier einen Transceiver 6 und einen Prozessor 7 auf. Zusätzlich ist ein Aktuator 8 und/oder ein Sensor 9 vorgesehen. Der Transceiver 6 dient dem Senden und Empfangen von Nachrichten 10. Der Prozessor 7 dient hier dem Verarbeiten der Nachrichten 10 und dem Ausführen von darin enthaltenen Befehlen, insbesondere durch entsprechende Ansteuerung des Aktuators 8 und/oder Sensors 9.

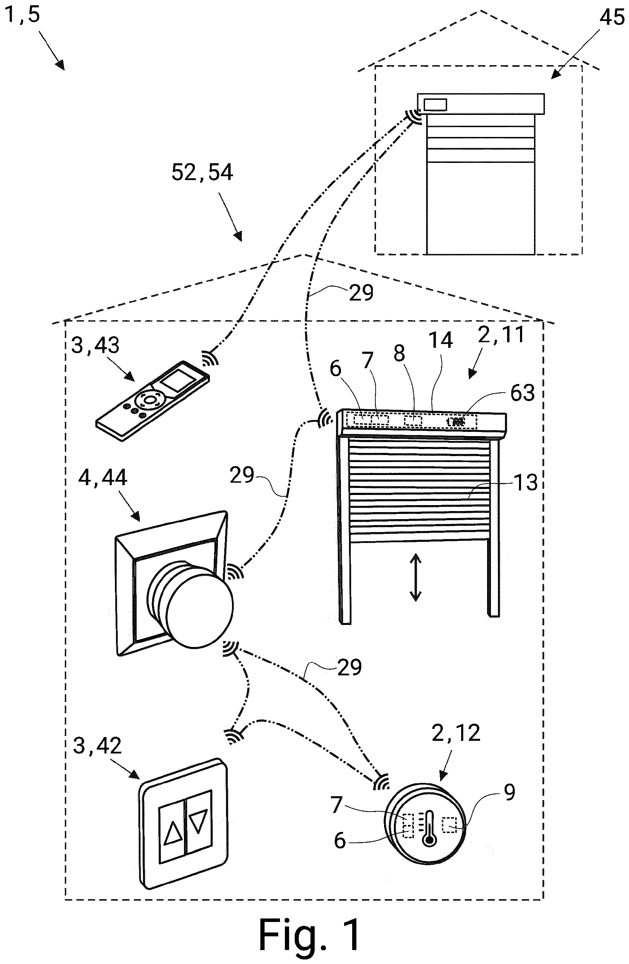

Im Ausführungsbeispiel der Fig. 1 sind zwei erste Einheiten 2 gezeigt. Dies sind hier die Rollladeneinheit 11 und die Sensoreinheit 12. Die Rollladeneinheit 11 weist einen Aktuator 8 zum Herauffahren und zum Herunterfahren eines Rollladens 13 auf. Sie kann zudem auch einen Rollladen 13 aufweisen, vorzugsweise wird sie jedoch durch einen Rohrmotor 14 für einen Rollladen 13 gebildet. Die Sensoreinheit 12 weist im Ausführungsbeispiel als Sensor 9 einen Temperatursensor auf.

Die erste Einheit 2 weist einen Betriebsmodus 15 und einen Energiesparmodus 16 auf. Im Energiesparmodus 16 verbraucht die erste Einheit 2 weniger Energie als im Betriebsmodus 15.

Wesentlich ist nun, dass die erste Einheit 2 aus dem Energiesparmodus 16 durch ein Aufwecksignal 17 in den Betriebsmodus 15 überführbar ist. Das Aufwecksignal 17 entspricht hier einer vordefinierten Signalfolge. Hier ist vorgesehen, dass die erste Einheit 2 das Aufwecksignal 17 mehrstufig prüft, bevor sie in den Betriebsmodus 15 wechselt.

Die erste Einheit 2 prüft im Energiesparmodus 16 vorschlagsgemäß wiederkehrend, insbesondere zyklisch, in Lauschperioden 18, ob ein ankommendes drahtloses Signal eine vordefinierte Signalstärke überschreitet (Signalstärkenprüfung 19).

Sofern das ankommende drahtlose Signal eine vordefinierte Signalstärke überschreitet, prüft die erste Einheit 2, ob eine definierte Signalfolge gemäß dem Aufwecksignal 17 detektiert wird (Signalfolgenprüfung 20).

Sofern die definierte Signalfolge gemäß dem Aufwecksignal 17 detektiert wird, prüft die erste Einheit 2, ob ein Synchronisationsfeld 21 detektiert wird und, sofern ein Synchronisationsfeld 21 in detektiert wird (Synchronisationsfeldprüfung 22), wechselt die erste Einheit 2 in den Betriebsmodus 15, um eine Nachricht 10 zu verarbeiten.

Diese vorschlagsgemäße mehrstufige Prüfung ermöglicht einen besonders geringen Energieverbrauch der ersten Einheit 2, da ein ungewollter Wechsel in den energieintensiveren Betriebsmodus 15 hierdurch sehr zuverlässig vermieden werden kann.

Vorgeschlagen wird ferner eine Einheit, welche als erste Einheit 2 zur Durchführung dieser mehrstufigen Prüfung wie beschrieben ausgebildet und eingerichtet ist. Ferner wird eine Heimautomatisierungsanordnung 1 zur Durchführung des vorschlagsgemäßen Verfahrens bzw. mit der vorschlagsgemäßen Einheit vorgeschlagen. Diesen Lehren kommt jeweils eigenständige Bedeutung zu. Auf die jeweiligen Ausführungen darf verwiesen werden.

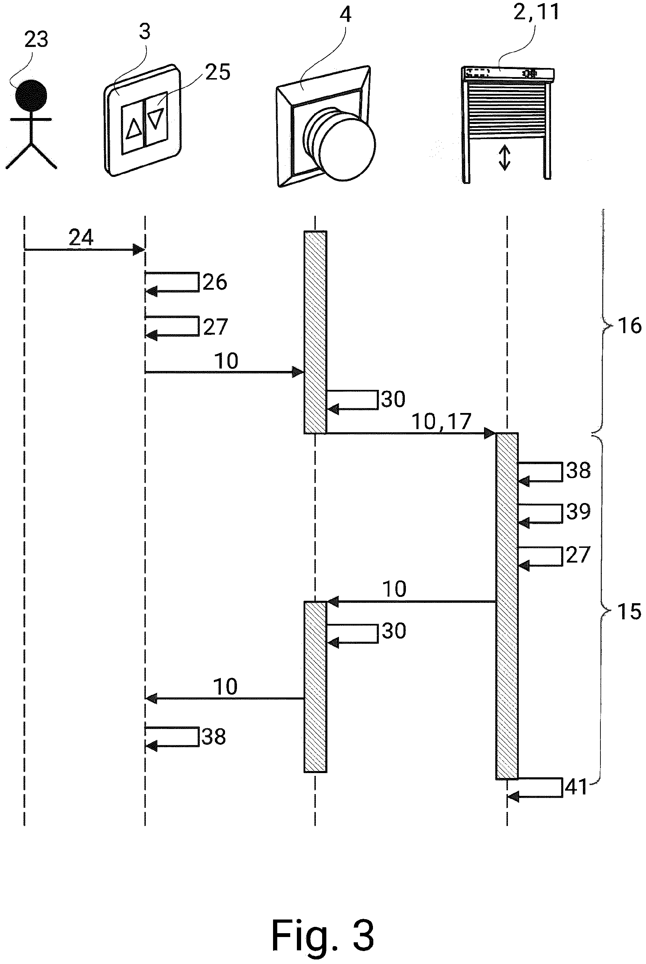

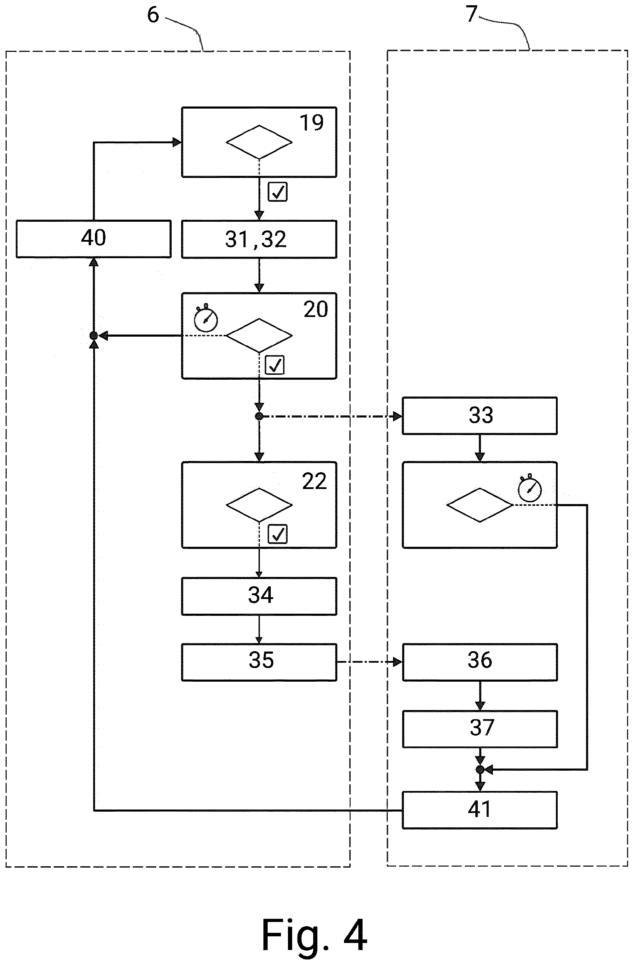

Das Aufwecken der ersten Einheit 2 wird nachfolgend anhand der Figuren 3 und 4 näher beschrieben.

Die Fig. 3 zeigt am Beispiel einer Rollladeneinheit 11 als erster Einheit 2 das vorschlagsgemäße Verfahren. Es wird zunächst ein Befehl an der zweiten Einheit 3 für die erste Einheit 2 ausgelöst. Hier gibt ein Benutzer 23 einen Befehl, beispielsweise zum Hoch- oder Herunterfahren des Rollladens 13 der Rollladeneinheit 11. Im Ausführungsbeispiel durch einen Tastendruck 24. Auf das Drücken der entsprechenden Taste 25 an der zweiten Einheit 3 generiert diese einen Befehl (Befehlsgenerierung 26) verschlüsselt 27 diesen gegebenenfalls (Verschlüsselung 27) und sendet ihn als Inhalt einer Nachricht 28 mit derselben aus.

Die dritte Einheit 4 befindet sich mit der ersten Einheit 2 in einer Parent-Child-Verbindung 29. Sie empfängt direkt oder indirekt die Nachricht 10 der zweiten Einheit 3 an die erste Einheit 2. Dies löst in der dritten Einheit 4 eine Weiterleitungsroutine 30 aus. Daraufhin sendet sie das Aufwecksignal 17 aus und leitet die Nachricht 10 weiter. Hier stellt die dritte Einheit 4 das Aufwecksignal 17 als Präambel der weitergeleiteten Nachricht 10 voran.

Die erste Einheit 2 befindet sich im Ausführungsbeispiel beim Aussenden des Aufwecksignals 17 durch die dritte Einheit 4 im Energiesparmodus 16. In diesem prüft sie wie beschrieben wiederkehrend, insbesondere zyklisch, in Lauschperioden 18, ob ein ankommendes drahtloses Signal eine vordefinierte Signalstärke überschreitet (Signalstärkenprüfung 19). Vorliegend wird ein RSSI-Wert (Received Signal Strength Indicator) geprüft. Hierbei handelt es sich um eine erste Stufe der Prüfung. Im Ausführungsbeispiel führt diese Prüfung der Transceiver 6 aus, wie in der Fig. 4 gezeigt. Wird die vordefinierte Signalstärke nicht überschritten, setzt die erste Einheit 2, insbesondere der Transceiver 6 das wiederkehrende, insbesondere zyklische, Prüfen im Energiesparmodus 16 fort, ob das ankommende drahtlose Signal eine vordefinierte Signalstärke überschreitet.

Überschreitet das ankommende drahtlose Signal eine vordefinierte Signalstärke, wechselt der Transceiver 6 hier und vorzugsweise in einen Empfangsmodus 31 und/oder startet einen Aufwecksignal-Timer 32. Dieser läuft hier im Transceiver 6.

Sofern das ankommende drahtlose Signal eine vordefinierte Signalstärke überschreitet, wie dies bspw. bei dem Aufwecksignal 17 der Fall ist, prüft die erste Einheit 2, hier und vorzugsweise für einen definierten Zeitraum, ob eine definierte Signalfolge gemäß dem Aufwecksignal 17 detektiert wird (Signalfolgenprüfung 20). Dies ist eine weitere Stufe der Prüfung. Im Ausführungsbeispiel führt auch diese Prüfung der Transceiver 6 aus.

Wird die definierte Signalfolge gemäß dem Aufwecksignal 17, insbesondere in einem definierten Zeitraum, nicht detektiert, setzt die erste Einheit 2, hier der Transceiver 6, das wiederkehrende, insbesondere zyklische, Prüfen, ob das ankommende drahtlose Signal eine vordefinierte Signalstärke überschreitet, in Lauschperioden 18 fort. Sofern die definierte Signalfolge gemäß dem Aufwecksignal 17 detektiert wird, startet der Transceiver 6 und/oder der Prozessor 7 einen Timer 33. Dieser läuft hier im Prozessor 7. Zusätzlich oder alternativ wird geprüft, ob ein Synchronisationsfeld 21, insbesondere innerhalb eines definierten Zeitraums, detektiert wird (Synchronisationsfeldprüfung 22). Dies ist eine weitere Stufe der Prüfung. Die Nachricht 10 wird empfangen (Nachrichtenempfang 34). Im Ausführungsbeispiel führt auch diese Prüfung der Transceiver 6 aus.

Sofern ein Synchronisationsfeld 21, insbesondere in dem definierten Zeitraum, detektiert wird, wechselt die erste Einheit 2 hier in den Betriebsmodus 15, um eine Nachricht 10 zu verarbeiten. Insbesondere kann vorgesehen sein, dass, sofern ein Synchronisationsfeld 21 detektiert wird, der Transceiver 6 und/oder der Prozessor 7 prüft, ob eine Nachricht 10 empfangen wurde, und/oder, dass der Transceiver 6 und/oder Prozessor 7 die erste Einheit 2 in den Betriebsmodus 15 versetzt, um die Nachricht 10 zu verarbeiten. Hier und vorzugsweise meldet der Transceiver 6 dem Prozessor 7, dass eine Nachricht 10 empfangen wurde (Nachrichtenmeldung 35). Der Prozessor 7 liest diese daraufhin im Transceiver 6 aus (Nachrichtenabruf 36). Danach kann der Prozessor 7 die Nachricht 10 verarbeiten und ggf. einen darin enthaltenen Befehl umsetzen, insbesondere eine Aktion ausführen 37. Sofern eine Nachricht 10, insbesondere innerhalb des definierten Zeitraums, das Synchronisationsfeld 21 und/oder eine Nachricht 10 nicht empfangen wurde, setzt die erste Einheit 2, insbesondere der Transceiver 6, das prüfen, ob das ankommende drahtlose Signal eine vordefinierte Signalstärke überschreitet in Lauschperioden 18 fort. Hierzu kann der Prozessor 7 einen entsprechenden Befehl an den Transceiver 6 senden.

Optional kann zusätzlich vor dem Wechsel in den Betriebsmodus 15 eine Prüfung der empfangenen Nachricht 10 vorgesehen sein, bevor in den Betriebsmodus 15 gewechselt wird. Hierbei kann es sich insbesondere um einen sogenannten CRC-Check handeln (cyclic redundancy check), also eine zyklische Redundanzprüfung. Auch diese Prüfung führt vorzugsweise der Transceiver 6 aus. Diese Prüfung ist im Ausführungsbeispiel der Fig. 4 nicht gezeigt.

Im Ausführungsbeispiel der Fig. 3 verarbeitet die erste Einheit 2 die empfangene Nachricht 10. Sie entschlüsselt den Inhalt der Nachricht 28 (Nachrichtenentschlüsselung 38). Sie generiert eine Empfangsbestätigung und verschlüsselt 27 und signiert diese (Empfangsbestätigungsgenerierung 39 und Verschlüsselung 27). Danach sendet sie diese als Nachricht 10 aus. Die dritte Einheit 4 empfängt sie. Dies löst eine Weiterleitungsroutine 30 aus. Daraufhin leitet die dritte Einheit 4 die Empfangsbestätigung als Nachricht 10 zur zweiten Einheit 3 weiter. Diese entschlüsselt diese (Nachrichtenentschlüsselung 38).

Hier wird die Nachricht 10 von dem Prozessor 7 verarbeitet. Die erste Einheit 2 setzt danach einen in der Nachricht 10 enthaltenen Befehl um. Hier ist der in der Nachricht 10 an die erste Einheit 2 enthaltene Befehl ein Befehl zum Runter- oder Herauffahren des Rollladens 13. Der Befehl ist also ein Befehl zum Ansteuern des Aktuators 8, hier des Antriebs des Rollladens 13. Es kann aber auch ein Befehl zum Auslösen und/oder Vorbereiten eines Updatevorgangs der ersten Einheit 2 und/oder ein Befehl zur Konfiguration der ersten Einheit 2 sein. Der Befehl wird dann von der ersten Einheit 2 ausgeführt. Hier wird der Rollladen 13 herauf- oder heruntergefahren. Nach dem Ausführen des Befehls wechselt die erste Einheit 2 von dem Betriebsmodus 15 wieder in den Energiesparmodus 16 (Wechsel in Energiesparmodus 40). Sie setzt das wiederkehrende, insbesondere zyklische, Prüfen, ob das ankommende drahtlose Signal eine vordefinierte Signalstärke überschreitet, in Lauschperioden 18 fort. Hier ist also vorgesehen, dass nach dem Verarbeiten des Befehls und/oder dem Durchführen des durch den Befehl vorbereiteten oder ausgelösten Vorgangs das Prüfen, ob das ankommende drahtlose Signal eine vordefinierte Signalstärke überschreitet, in Lauschperioden 18 fortgesetzt wird. Hierzu kann der Prozessor 7 einen entsprechenden Befehl zum Wechsel in den Energiesparmodus 41 nach dem Ablauf des Timers 33 und/oder dem Ausführen der Aktion an den Transceiver 6 geben.

Als zweite Einheit ist im Ausführungsbeispiel der Fig. 1 ein Schalter 42, hier als Funk-Wandschalter ausgebildet, und als weitere zweite Einheit eine bewegliche Funk-Fernbedienung 43 vorgesehen.

Die dritte Einheit 4 ist im Ausführungsbeispiel als Funkeinheit 44 ausgebildet. Ferner ist eine dritte Einheit 4 in der Form einer zweiten Rollladeneinheit 45 dargestellt, welche einem separaten Gebäude zugeordnet ist. Im Ausführungsbeispiel sind die Funkeinheit 44 und die Sensoreinheit 12 sowie die zweite Rollladeneinheit 45 und die Rollladeneinheit 11 eine Parent-Child-Verbindung 29 eingegangen. Alternativ kann die Rollladeneinheit 11 jedoch auch eine Parent-Child-Verbindung 29 mit der Funkeinheit 44 eingehen, wie dies ebenfalls in der Fig. 1 gezeigt ist.

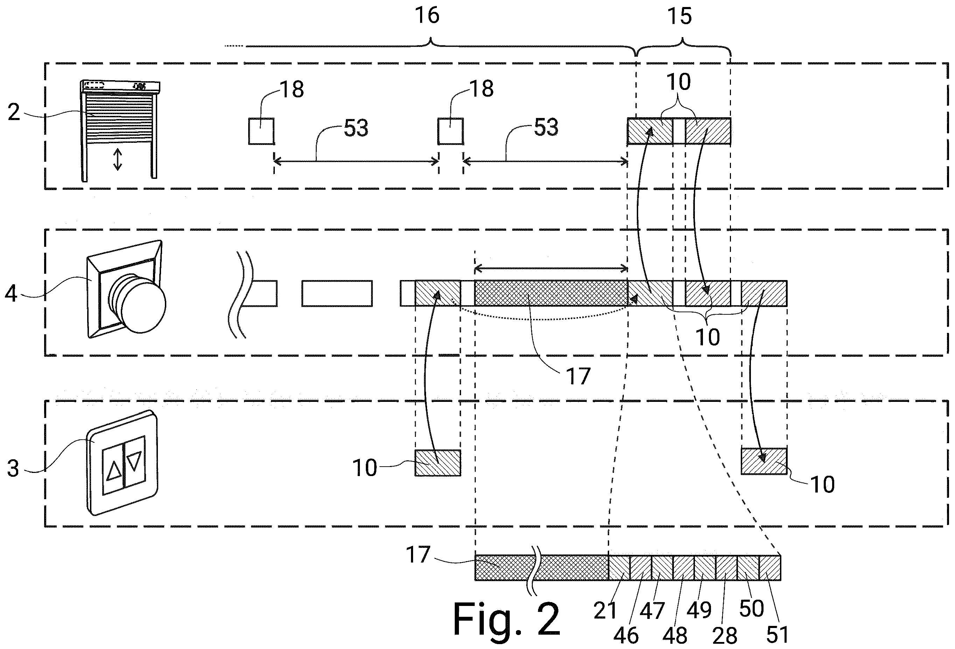

Hier ist nun vorgesehen, dass die dritte Einheit 4, auf das direkte oder indirekt Empfangen einer Nachricht 10 von der zweiten Einheit 3 für die erste Einheit 2, die erste Einheit 2 mit dem Aufwecksignal 17 aufweckt, wie dies in der Fig. 2 gezeigt ist. Dieses Aufwecken wurde vorstehend bereits für die erste Einheit 2 beschrieben.

Hierdurch ist es für einen energiesparenden Betrieb der ersten Einheit 2 nicht mehr notwendig, dass sich die erste Einheit 2 als Child durch zyklisches Aufwachen und Abfragen einen Befehl bei seinem Parent abholt. Vielmehr wird die erste Einheit 2 mit einem besonders sparsamen Energiesparmodus 16 versehen, welcher es ermöglicht, dass die erste Einheit 2 als Child durch ein Aufwecksignal 17 der dritten Einheit 4 als Parent sicher aus dem Energiesparmodus 16 in einen Betriebsmodus 15 überführt wird. Hierdurch kann eine Nachricht 10 sicher und schnell empfangen werden sowie ein darin enthaltener Befehl ausgeführt werden und gleichzeitig ein energiesparender Betrieb sichergestellt werden. Hier zeichnet sich die Parent-Child-Verbindung 29 dadurch aus, dass sich das Parent und das Child auf eine Verbindung verständigt haben, welche es dem Parent erlaubt, das Child mit dem Aufwecksignal 17 aufzuwecken. Die Herstellung einer solchen Parent-Child-Verbindung 29 ist weiter unten näher beschrieben.

Hier und vorzugsweise ist vorgesehen, wie in der Fig. 2 gezeigt, dass die dritte Einheit 4 das Aufwecksignal 17 für die erste Einheit 2 generiert und die Nachricht 10 zu der ersten Einheit 2 weiterleitet. Dabei stellt die dritte Einheit 4 das Aufwecksignal 17 als Präambel der weitergeleiteten Nachricht 10 voran und/oder verlängert die Präambel der weiterzuleitenden Nachricht 10 zum Aufwecksignal 17. Das Aufwecksignal 17 ist hier eine Präambel für die Nachricht 10, die die dritte Einheit 4 zu der ersten Einheit 2 weiterleitet.

Die weitergeleitete Nachricht 10 weist hier das Aufwecksignal 17 sowie ein Synchronisationsfeld 21 und/oder eine Empfängerkennung 46 und/oder eine Absenderkennung 47 und/oder einen Nachrichtenzähler 48 und/oder einen Time-to-Live-Zähler 49 und/oder einen Inhalt der Nachricht 28 und/oder eine Signatur 50 und/oder ein Prüffeld 51 auf.

Das Synchronisationsfeld 21 dient der Transceiver-Synchronisation von der sendenden Einheit und der empfangenden Einheit der jeweiligen Nachricht 10. Die Empfängerkennung 46 spezifiziert die Einheit, an welche die Nachricht 10 gerichtet ist, während die Absenderkennung 47 die Einheit spezifiziert, welche diese generiert und ausgesendet hat. Der Nachrichtenzähler 48 dient dazu, die Anzahl der Nachricht 10 im Netzwerk 52 zu zählen. Der Time-to-Live-Zähler 49 spezifiziert die Gültigkeitsdauer, die der Nachricht 10 mitgegeben wird. Dieser wird hier bei einer Weiterleitung der Nachricht 10 heruntergezählt. Ist dieser null, erfolgt keine Weiterleitung der Nachricht 10 durch andere Einheiten mehr. Der Inhalt der Nachricht 28 ist der eigentliche Payload der Nachricht 10. Hier ist es der auszuführende Befehl. Die Signatur 50 dient der Authentizitätsprüfung der absendenden Einheit der Nachricht 10 durch die empfangende Einheit. Das Prüffeld 51 dient der Prüfung der Nachricht 10, insbesondere auf Übermittlungsfehler im Rahmen einer zyklischen Redundanzprüfung.

Wie beschrieben, weist der Energiesparmodus 16 der ersten Einheit 2 Lauschperioden 18 auf, in denen die erste Einheit 2 prüft, ob sie das Aufwecksignal 17 empfängt. Dabei ist das Aufwecksignal 17 vorzugsweise länger, als die Pause 53 zwischen zwei Lauschperioden 18. Hierdurch kann ein sicheres Aufwecken in der jeweils auf den Beginn des Aufwecksignals 17 folgenden Lauschperiode sichergestellt werden.

Im Ausführungsbeispiel ist vorgesehen, dass eine Einheit 2, 3, 4 eine ursprünglich von ihr ausgehende Nachricht nach einem Resend-Timeout erneut aussendet, sofern sie innerhalb dieses Resend-Timeouts keine Bestätigung des Erhalts der Nachricht erhalten hat.

Weiter ist hier und vorzugsweise vorgesehen, dass in der Heimautomatisierungsanordnung 1 zwischen einzelnen Einheiten ein als Mesh-Netzwerk 54, insbesondere Flooding-Mesh-Netzwerk, ausgebildetes Netzwerk 52 besteht. Ein Mesh-Netzwerk 54 zeichnet sich dadurch aus, dass das einzelne oder alle Einheiten Nachrichten 10 von und für andere Einheiten weiterleiten und so weiterverteilen.

Im Ausführungsbeispiel ist die erste Einheit 2 (als Child) über die dritte Einheit 4 (als Parent) in das Netzwerk 52 integriert. Die erste Einheit 2 nimmt aber nicht an der Weiterverteilung der Nachrichten 10 im Mesh-Netzwerks 54 teil. Im Ausführungsbeispiel nehmen die Einheiten, welche als Child eine Parent-Child-Verbindung 29 eingegangen sind, nicht an der Weiterverteilung der Nachrichten 10 teil.

Weiter ist hier und vorzugsweise vorgesehen, dass eine Einheit der Heimautomatisierungsanordnung 1, insbesondere die zweite Einheit und/oder die dritte Einheit 4, nicht an sie gerichtete Nachrichten 10 einer anderen Einheit erneut sendet, sofern sie keine Bestätigung des Erhalts der Nachricht 10 der anderen Einheit innerhalb einer Repeating-Zeit erhält. Die zweite Einheit und/oder die dritte Einheit 4 verteilen hier also Nachrichten 10 im Mesh-Netzwerk 54 weiter. Sie sind aktive Teilnehmer des Mesh-Netzwerks 54. Beim erneuten Senden und Weiterverteilen wird hier ein Time-to-Live-Zähler in der Nachricht 10 reduziert. Die Repeating-Zeit ist hier die Zeitspanne, nach der eine Einheit im Netzwerk 52 eine empfangene, nicht an sie adressierte Nachricht 10 erneut sendet und so weiterverteilt, sofern bis dahin keine Bestätigung des Erhalts der Nachricht 10 empfangen hat. Hierdurch kann das gleichzeitige Senden sehr vieler Nachrichten 10 wirksam vermieden werden.

Weiter ist hier und vorzugsweise vorgesehen, dass das Aufwecksignal 17 kürzer ist, als das Resend-Timeout, insbesondere der zweiten Einheit und/oder des Netzwerks 52, insbesondere des Mesh-Netzwerks 54. Hierdurch kann eine Störung des Aufwecksignals 17 durch ein erneutes Senden der Nachricht 10 durch eine andere Einheit wirksam vermieden werden.

Weiter ist hier und vorzugsweise vorgesehen, dass der Inhalt der Nachricht 28 von der zweiten Einheit 3 für die erste Einheit 2 verschlüsselt 27 ist, vorzugsweise Ende-zu-Ende-verschlüsselt ist. Im Ausführungsbeispiel ist der Inhalt der Nachricht 28, insbesondere nur der Inhalt der Nachricht 28, verschlüsselt 27. Den oder die Schlüssel für die Verschlüsselung 27 haben die erste Einheit 2 und die zweite Einheit vorzugsweise bei ihrem Pairing ausgetauscht. Hier ist vorgesehen, dass die dritte Einheit 4 den Inhalt der Nachricht 28 nicht auslesen kann.

Wie bereits zuvor beschrieben, sind die erste Einheit 2 und die dritte Einheit 4 dazu eingerichtet, miteinander eine Parent-Child-Verbindung 29 einzugehen. Durch das Eingehen der Parent-Child-Verbindung 29 wird eine Beziehung zwischen der ersten und der zweiten Einheit 3 hergestellt. Im Ausführungsbeispiel erfolgt hier der Versand von Nachrichten 10 von einer der zweiten Einheiten 3 immer über das Parent, hier die dritte Einheit 4, zu der ersten Einheit 2. Die dritte Einheit 4 ist hier dazu eingerichtet, dass wenn eine Parent-Child-Verbindung 29 zwischen der ersten Einheit 2 und der dritten Einheit 4 besteht und die dritte Einheit 4 eine Nachricht 10 direkt oder indirekt von der zweiten Einheit 3 für die erste Einheit 2 empfängt, das Aufwecksignal 17 für die erste Einheit 2 auszusenden.

Weiter ist hier und vorzugsweise vorgesehen, dass die Parent-Child-Verbindung 29, insbesondere zyklisch, geprüft wird und bei Unterschreiten einer vorbestimmten Verbindungsqualität eine neue Parent-Child-Verbindung 29 aufgebaut wird. Hier prüft die erste Einheit 2 die Parent-Child-Verbindung 29, insbesondere zyklisch, und bei Unterschreiten einer vorbestimmten Verbindungsqualität sucht sich die erste Einheit 2 einen neuen Parent für eine neue Parent-Child-Verbindung 29. Die erste Einheit 2 wählt hier für die neue Parent-Child-Verbindung 29 diejenige Einheit als neues Parent aus, deren Antwortnachricht 55 die beste Signalqualität aufweist. Hierdurch kann eine sichere stabile Integration des Child, hier der ersten Einheit 2, in das Heimautomatisierungsnetzwerk 5 und/oder die Heimautomatisierungsanordnung 1 gewährleistet werden.

Die erste Einheit 2 weist hier nur eine Parent-Child-Verbindung 29 auf. Diese kann zwar wechseln, es besteht jedoch zu einem Zeitpunkt immer nur eine Parent-Child-Verbindung 29 zu einer dritten Einheit 4. Die erste Einheit 2 weist hier nur eine Parent-Child-Verbindung 29 auf. Diese kann zwar wechseln, es besteht jedoch zu einem Zeitpunkt immer nur eine Parent-Child-Verbindung 29 zu einer dritten Einheit 4. Die erste Einheit 2 kann sich jedoch eine neue Parent-Child-Verbindung 29 suchen. Beispielsweise ist in der Fig. 1 gezeigt, dass die Rollladeneinheit 11 als erste Einheit 2 alternativ zu der zweiten Rollladeneinheit 45 als dritter Einheit 4 auch mit der Funkeinheit 44 als dritter Einheit 4 eine Parent-Child-Verbindung 29 eingehen kann.

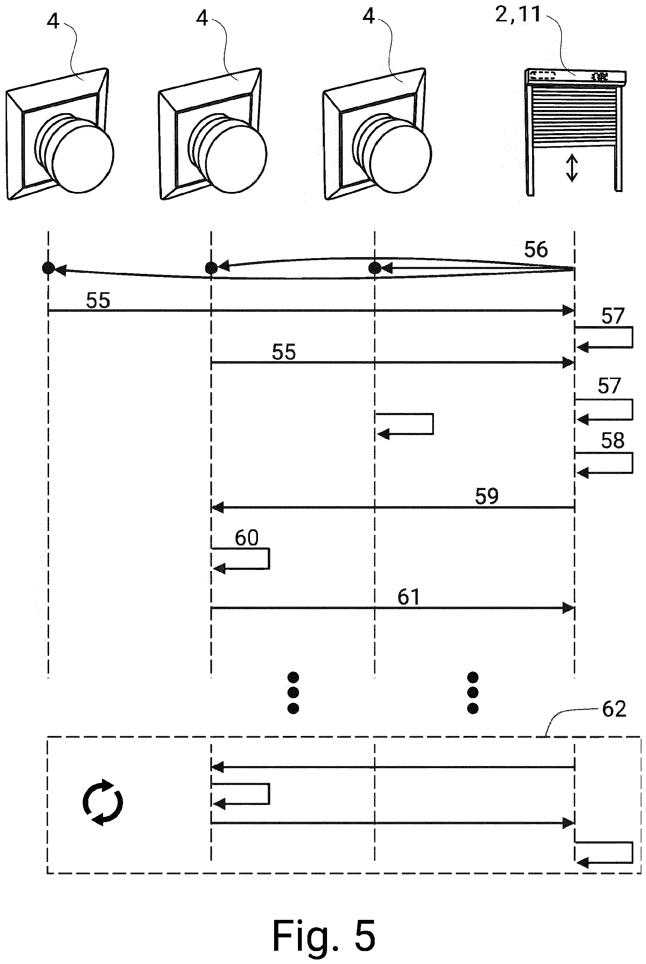

Weiter ist hier und vorzugsweise vorgesehen, dass das Aufwecksignal 17 in der Heimautomatisierungsanordnung 1 und/oder dem Heimautomatisierungsnetzwerk 5 ausschließlich in der Parent-Child-Kommunikation den Nachrichten 10 vorangestellt wird. Dies wird in Zusammenhang mit der Fig. 5 näher erläutert, anhand welcher beschrieben ist, wie eine Parent-Child-Verbindung 29 hergestellt werden kann.

Das Aufwecksignal 17 tritt im Heimautomatisierungsnetzwerk 5 und/oder der Heimautomatisierungsanordnung 1 hier und vorzugsweise also nur in Parent-Child-Verbindungen 29 auf. Alternativ kann es auch in einer direkten Kommunikation zwischen der zweiten Einheit 3 und der ersten Einheit 2 auftreten. Es kann dabei für mehrere verschiedene Parent-Child-Verbindungen 29 des Heimautomatisierungsnetzwerks 5 und/oder der Heimautomatisierungsanordnung 1 gleich ausgebildet sein, ist vorzugsweise aber für die einzelnen Parent-Child-Verbindungen 29 spezifisch ausgebildet. Es unterscheidet sich dann von dem Aufwecksignal 17 anderer Parent-Child-Verbindungen 29 der Heimautomatisierungsanordnung 1 und/oder des Heimautomatisierungsnetzwerks 5. Vorzugsweise ist die Länge des Aufwecksignals 17 in verschiedenen Parent-Child-Verbindungen 29 des Heimautomatisierungsnetzwerks 5 und/oder der Heimautomatisierungsanordnung 1 unterschiedliche lang und/oder gleich lang.

Hier und vorzugsweise gehört die dritte Einheit 4 dem Heimautomatisierungsnetzwerk 5 an und/oder ist mit einer Einheit des Heimautomatisierungsnetzwerks 5 gepairt, wie dies bei der Funkeinheit 44 in der Fig. 1 der Fall ist. Es kann aber auch vorgesehen sein, dass die dritte Einheit 4 dem Heimautomatisierungsnetzwerk 5 nicht angehört und/oder mit keiner Einheit des Heimautomatisierungsnetzwerks 5 gepairt ist. Dies trifft auf die zweite Rollladeneinheit 45 der Fig. 1 zu. Sie gehört zu einem anderen Heimautomatisierungsnetzwerk 5, hier dem eines separaten Gebäudes. Auch diese Einheit kann als Parent für das Aufwecken der ersten Einheit 2 und die Weiterleitung der Kommunikation zwischen der ersten Einheit 2 und der zweiten Einheit 3 dienen.

Weiter ist hier und vorzugsweise vorgesehen, dass die Kommunikation zwischen der zweiten Einheit 3 und dritten Einheit 4 zumindest abschnittsweise drahtlos ist und/oder die Kommunikation zwischen der ersten Einheit 2 und der dritten Einheit 4 zumindest abschnittsweise drahtlos ist und auf derselben Funkfrequenz erfolgt, wie die Kommunikation zwischen der zweiten Einheit 3 und der dritten Einheit 4. Im Ausführungsbeispiel und vorzugsweise erfolgt die drahtlose Kommunikation innerhalb der Heimautomatisierungsanordnung 1 und/oder dem Heimautomatisierungsnetzwerk 5 und insbesondere mit der dritten Einheit 4 auf derselben Funkfrequenz.

Das Heimautomatisierungsnetzwerk 5 zeichnet sich hier dadurch aus, dass die ihm angehörenden Einheiten einen Pairing-Prozess miteinander durchlaufen haben. In diesem werden sie einander zugeordnet. Dabei muss nicht jede Einheit mit jeder anderen Einheit gepairt sein, um dem Heimautomatisierungsnetzwerk 5 anzugehören, sondern es reicht aus, dass einzelne Einheiten miteinander gepairt sind und das Heimautomatisierungsnetzwerk 5 eine gemeinsame Menge an gepairten Einheiten aufweist. Während des Pairing-Prozesses können auch Schlüssel zur Signierung und/oder Verschlüsselung 27 zwischen den zu pairenden Einheiten für die zukünftige Kommunikation ausgetauscht werden. Diese sind vorzugsweise für die beiden zu pairenden Einheiten spezifisch. Zusätzlich oder alternativ kann für das Heimautomatisierungsnetzwerk 5 auch ein gemeinsamer Schlüssel vorgesehen sein und alle Einheiten, welche über diesen Schlüssel mit anderen Einheiten verbunden sind, gehören dem Heimautomatisierungsnetzwerk 5 an.

Die Herstellung einer Parent-Child-Verbindung 29 soll nachfolgend anhand der Fig. 5 beschrieben werden. Ist die erste Einheit 2 noch keine Parent-Child-Verbindung 29 eingegangen, sendet sie eine Verbindungsanfrage 56 aus, in der sie umliegende Einheiten anfragt, ob diese ihr Parent werden können. Dies kann beispielsweise dann erfolgen, wenn die erste Einheit 2 mit Energie versorgt wird. Dies kann beispielsweise das Einsetzen einer Batterie sein.

Daraufhin prüfen die Verbindungsanfrage 56 empfangende Einheiten, ob sie als Parent für die erste Einheit 2 geeignet sind. Sofern dies der Fall ist, beantworten sie mit einer Antwortnachricht 55 die Verbindungsanfrage 56 der ersten Einheit 2. Vorzugsweise enthält die Antwortnachricht 55 eine die Verbindungsqualität beschreibende Angabe. Hier ist es die Signalstärke, mit der die Verbindungsanfrage 56 von der antwortenden Einheit empfangen wurde. Die erste Einheit 2 wertet die Verbindungsqualität zu den Einheiten aus, deren Antwortnachricht 55 sie empfangen hat (Verbindungsqualitätsauswertung 57). Hierzu nutzt sie die Angabe der Verbindungsqualität der Antwortnachrichten 55 und/oder führt hierzu eine eigene Messung durch. Dies kann beispielsweise die Messung der Signalstärke (RSSI) der empfangenen Antwortnachrichten 55 sein.

Die erste Einheit 2 wählt, vorzugsweise in Abhängigkeit von der Verbindungsqualität, eine der antwortenden Einheiten als Parent aus und stellt die Parent-Child-Verbindung 29 her (Bewertung und Auswahl des Parents 58). Vorzugsweise sendet die erste Einheit 2 dazu eine Nachricht 10 an die als Parent ausgewählte Einheit. Diese Nachricht 10 kann Informationen darüber enthalten, wie regelmäßig sich die erste Einheit 2 bei seinem Parent meldet und/oder wie groß der zeitliche Abstand zweier Lauschperioden 18 ist (Registriernachricht 59). Die dritte Einheit 4 prüft das Hinzufügen der ersten Einheit 2 als Child (Child-Registrier-Prüfung 60) und bestätigt dies der ersten Einheit 2. Hierauf erfolgt eine Bestätigung der ersten Einheit 2, hier des Childs mittels einer Nachricht 10 (Bestätigungsnachricht 61).

Nach der Herstellung der Parent-Child-Verbindung 29 meldet sich die erste Einheit 2 als Child, insbesondere regelmäßig, bei der dritten Einheit 4 als seinem Parent. Dies dient der Verbindungsprüfung 62. Das Parent antwortet und übermittelt das Ergebnis einer Messung für die Verbindungsqualität an das Child. Das Child prüft selbst auch die Verbindungsqualität. Danach entscheidet es, insbesondere in Abhängigkeit von der Verbindungsqualität, ob die Parent-Child-Verbindung 29 bestehen bleibt, oder, ob es sich einen neuen Parent sucht. Im letzteren Fall sendet die erste Einheit 2 erneut eine Verbindungsanfrage 56 aus.

Schließlich sei noch darauf hingewiesen, dass die erste Einheit 2, die zweite Einheit und/oder die dritte Einheit 4 nicht wie im Ausführungsbeispiel ausgebildet sein müssen. Beispielsweise kann alternativ die erste Einheit 2 auch einen Aktuator 8 für eine andere Aufgabe aufweisen. Beispielsweise kann sie als Gurtwickler für einen Rollladen oder als Markiseneinheit ausgebildet sein, welche einen Aktuator 8 zum Einfahren und Ausfahren einer Markise aufweist. Zusätzlich oder alternativ kann eine als Sensoreinheit 12 ausgebildete erste Einheit 2 einen Sonnensensor und/oder einen Windsensor und/oder einen Bewegungssensor und/oder einen Beschleunigungssensor und/oder einen Rauchwarnsensor aufweisen. Natürlich kann die erste Einheit 2 sowohl einen Aktuator 8 als auch einen Sensor 9 oder mehrere Sensoren 9 aufweisen.

Hier weist die erste Einheit 2 die erste Einheit 2 zur Energieversorgung einen Energiespeicher 63, insbesondere eine wiederaufladbare Batterie auf. Zusätzlich oder alternativ kann sie auch ein Solarmodul zur Energieversorgung aufweisen. Bei einer solchen Ausgestaltung ist die energiesparende Ausgestaltung des Verfahrens, der Heimautomatisierungsanordnung 1 wie auch insbesondere der ersten Einheit 2 von besonderer Bedeutung.

Auch die zweite Einheit und/oder die dritte Einheit 4 kann anders ausgebildet sein als im Ausführungsbeispiel beschrieben. Vorzugsweise wird die dritte Einheit 4 über ein Stromnetz mit Energie versorgt, während die zweite Einheit ebenfalls über das Stromnetz oder einen Energiespeicher 63 mit Strom versorgt wird.

### Bezugszeichenliste

- 1: Heimautomatisierungsanordnung
- 2: erste Einheit
- 3: zweite Einheit
- 4: dritte Einheit
- 5: Heimautomatisierungsnetzwerk
- 6: Transceiver
- 7: Prozessor
- 8: Aktuator
- 9: Sensor
- 10: Nachricht
- 11: Rollladeneinheit
- 12: Sensoreinheit
- 13: Rollladens
- 14: Rohrmotor
- 15: Betriebsmodus
- 16: Energiesparmodus
- 17: Aufwecksignal
- 18: Lauschperioden
- 19: Signalstärkenprüfung
- 20: Signalfolgenprüfung
- 21: Synchronisationsfeld
- 22: Synchronisationsfeldprüfung
- 23: Benutzer
- 24: Tastendruck
- 25: Taste
- 26: Befehlsgenerierung
- 27: Verschlüsselung
- 28: Inhalt der Nachricht
- 29: Parent-Child-Verbindung
- 30: Weiterleitungsroutine
- 31: Empfangsmodus
- 32: Aufwecksignal-Timer
- 33: Timer
- 34: Nachrichtenempfang
- 35: Nachrichtenmeldung
- 36: Nachrichtenabruf
- 37: Aktion ausführen
- 38: Nachrichtenentschlüsselung
- 39: Empfangsbestätigungsgenerierung
- 40: Wechsel in Energiesparmodus
- 41: Befehl zum Wechsel in den Energiesparmodus
- 42: Schalter
- 43: Funk-Fernbedienung
- 44: Funkeinheit
- 45: zweite Rollladeneinheit
- 46: Empfängerkennung
- 47: Absenderkennung
- 48: Nachrichtenzähler
- 49: Time-to-Live-Zähler
- 50: Signatur
- 51: Prüffeld
- 52: Netzwerk
- 53: Pause
- 54: Mesh-Netzwerk
- 55: Antwortnachricht
- 56: Verbindungsanfrage
- 57: Verbindungsqualitätsauswertung
- 58: Bewertung und Auswahl des Parents
- 59: Registriernachricht
- 60: Child-Registrier-Prüfung
- 61: Bestätigungsnachricht
- 62: Verbindungsprüfung
- 63: Energiespeicher

## Patentansprüche

1. Verfahren zum Betreiben einer ersten Einheit (2) einer Heimautomatisierungsanordnung (1), wobei die erste Einheit (2) einen Betriebsmodus (15) und einen Energiesparmodus (16) aufweist, in welchem die erste Einheit (2) weniger Energie verbraucht als im Betriebsmodus (15), wobei die erste Einheit (2) aus dem Energiesparmodus (16) durch ein Aufwecksignal (17) in den Betriebsmodus (15) überführbar ist,
wobei die erste Einheit (2) einen Transceiver (6), einen Prozessor (7) und einen Aktuator (8) und/oder Sensor (9) aufweist, wobei die erste Einheit (2) im Energiesparmodus (16) wiederkehrend, insbesondere zyklisch, in Lauschperioden (18) prüft, ob ein ankommendes drahtloses Signal eine vordefinierte Signalstärke überschreitet,
wobei, sofern das ankommende drahtlose Signal eine vordefinierte Signalstärke überschreitet,
die erste Einheit (2) prüft, ob eine definierte Signalfolge gemäß dem Aufwecksignal (17) detektiert wird,
und, sofern die definierte Signalfolge gemäß dem Aufwecksignal (17) detektiert wird, prüft, ob ein Synchronisationsfeld (21) detektiert wird,
und, sofern ein Synchronisationsfeld (21) in detektiert wird, die erste Einheit (2) in den Betriebsmodus (15) wechselt, um eine Nachricht (10) zu verarbeiten.

2. Verfahren nach Anspruch 1, **dadurch gekennzeichnet, dass** der Transceiver (6), sofern das ankommende drahtlose Signal eine vordefinierte Signalstärke nicht überschreitet, das wiederkehrende, insbesondere zyklische, Prüfen, ob das ankommende drahtlose Signal eine vordefinierte Signalstärke überschreitet, in Lauschperioden (18) fortsetzt,
und/oder,
dass der Transceiver (6), sofern ein ankommendes drahtloses Signal eine vordefinierte Signalstärke überschreitet, in einen Empfangsmodus (31) wechselt und/oder einen Aufwecksignal-Timer (32) startet.

3. Verfahren nach Anspruch 1 oder 2, **dadurch gekennzeichnet, dass** der Transceiver (6) im Empfangsmodus (31), sofern die definierte Signalfolge gemäß dem Aufwecksignal (17) nicht detektiert wird, das wiederkehrende, insbesondere zyklische, Prüfen, ob das ankommende drahtlose Signal eine vordefinierte Signalstärke überschreitet, in Lauschperioden (18) fortsetzt,
und/oder,
dass der Transceiver (6) und/oder der Prozessor (7), sofern die definierte Signalfolge gemäß dem Aufwecksignal (17) detektiert wird, ein Timer (33), insbesondere vom Prozessor (7), gestartet wird und/oder geprüft wird, insbesondere vom Transceiver (6), ob ein Synchronisationsfeld (21) detektiert wird.

4. Verfahren nach einem der vorhergehenden Ansprüche, **dadurch gekennzeichnet, dass**, sofern ein Synchronisationsfeld (21) detektiert wird, der Transceiver (6) und/oder der Prozessor (7) prüft, ob eine Nachricht (10) empfangen wurde und/oder, dass der Transceiver (6) und/oder Prozessor (7) die erste Einheit (2) in den Betriebsmodus (15) versetzt, um die Nachricht (10) zu verarbeiten.

5. Verfahren nach einem der vorhergehenden Ansprüche, **dadurch gekennzeichnet, dass**, die Nachricht (10) von dem Prozessor (7) verarbeitet wird, vorzugsweise, dass die erste Einheit (2) danach einen in der Nachricht (10) enthaltenen Befehl umsetzt, weiter vorzugsweise, dass der Befehl das Ansteuern eines Aktuators (8) der ersten Einheit (2), insbesondere eines Rohrmotors (14) für einen Rollladen (13) und/oder eine Markise, ist und/oder, dass der Befehl einen Updatevorgang der ersten Einheit (2) auslöst und/oder vorbereitet.

6. Verfahren nach einem der vorhergehenden Ansprüche, **dadurch gekennzeichnet, dass** nach dem Verarbeiten des Befehls und/oder dem Durchführen des durch den Befehl vorbereiteten oder ausgelösten Vorgangs das Prüfen, ob das ankommende drahtlose Signal eine vordefinierte Signalstärke überschreitet, in Lauschperioden (18) fortgesetzt wird

7. Verfahren nach einem der vorhergehenden Ansprüche, **dadurch gekennzeichnet, dass**, sofern kein Synchronisationsfeld (21) detektiert und/oder keine Nachricht (10) empfangen wird, der Transceiver (6) das wiederkehrende, insbesondere zyklische, Prüfen, ob das ankommende drahtlose Signal eine vordefinierte Signalstärke überschreitet, in Lauschperioden (18) fortsetzt.

8. Verfahren nach einem der vorhergehenden Ansprüche, **dadurch gekennzeichnet, dass** die erste Einheit (2) mit einer zweiten Einheit (3) gepairt ist und/oder mit einer zweiten Einheit (3) ein und demselben Heimautomatisierungsnetzwerk (5) angehört, vorzugsweise, dass von der ersten Einheit (2) nach dem Aufwecksignal (17) und dem Synchronisationsfeld (21) eine Nachricht (10) von der zweiten Einheit (3) empfangen wird.

9. Verfahren nach einem der vorhergehenden Ansprüche, **dadurch gekennzeichnet, dass** die erste Einheit (2) und eine dritte Einheit (4) eine Parent-Child-Verbindung (29) eingegangen sind, vorzugsweise, dass von der dritten Einheit (4) ein Aufwecksignal (17) empfangen wird und die erste Einheit (2) aufweckt, vorzugsweise, dass die erste Einheit (2) nach dem Aufwecksignal (17) und dem Synchronisationsfeld (21) eine Nachricht (10) von der zweiten Einheit (3) empfängt, welche von der dritten Einheit (4) zu ihr weitergeleitet wurde.

10. Verfahren nach einem der vorhergehenden Ansprüche, **dadurch gekennzeichnet, dass** die Parent-Child-Verbindung (29), insbesondere zyklisch, geprüft wird und bei Unterschreiten einer vorbestimmten Verbindungsqualität eine neue Parent-Child-Verbindung (29) aufgebaut wird, vorzugsweise, dass die erste Einheit (2) die Parent-Child-Verbindung (29), insbesondere zyklisch, prüft und bei Unterschreiten einer vorbestimmten Verbindungsqualität einen neuen Parent für eine neue Parent-Child-Verbindung (29) sucht, vorzugsweise, dass die erste Einheit (2) für die neue Parent-Child-Verbindung (29) diejenige Einheit als neues Parent auswählt, deren Suchantwort die beste Signalqualität aufweist.

11. Verfahren nach einem der vorhergehenden Ansprüche, **dadurch gekennzeichnet, dass** die erste Einheit (2) nur eine Parent-Child-Verbindung (29) aufweist.

12. Einheit für eine Heimautomatisierungsanordnung (1), insbesondere zur Durchführung eines Verfahrens nach einem der vorhergehenden Ansprüche, mit einem Betriebsmodus (15) und einem Energiesparmodus (16), in welchem die Einheit weniger Energie verbraucht als im Betriebsmodus (15), wobei die Einheit aus dem Energiesparmodus (16) durch ein Aufwecksignal (17) in den Betriebsmodus (15) überführbar ist, wobei die Einheit einen Transceiver (6), einen Prozessor (7) und einen Sensor (9) und/oder Aktuator (8) aufweist, wobei die Einheit im Energiesparmodus (16) wiederkehrend, insbesondere zyklisch, Lauschperioden (18) aufweist, in denen die Einheit prüft, ob ein ankommendes drahtloses Signal eine vordefinierte Signalstärke überschreitet, wobei, sofern das ankommende drahtlose Signal eine vordefinierte Signalstärke überschreitet, die Einheit prüft, ob eine definierte Signalfolge gemäß dem Aufwecksignal (17) detektiert wird, und, sofern die definierte Signalfolge gemäß dem Aufwecksignal (17) detektiert wird, prüft, ob ein Synchronisationsfeld (21) detektiert wird, und, sofern dein Synchronisationsfeld (21) detektiert wird,
die Einheit in den Betriebsmodus (15) wechselt, um eine Nachricht (10) zu empfangen.

13. Einheit nach Anspruch 12, **dadurch gekennzeichnet, dass** die erste Einheit (2) als Rohrmotor (14) und/oder Gurtwickler ausgebildet ist und einen Aktuator (8) zum Herauffahren und zum Herunterfahren eines Rollladens (13) und/oder zum Einfahren und Ausfahren einer Markise aufweist,
und/oder dass die erste Einheit (2) als Sensoreinheit (12) ausgebildet ist und einen Sonnensensor und/oder einen Windsensor und/oder einen Bewegungssensor und/oder einen Beschleunigungssensor und/oder Rauchwarnmelder aufweist.

14. Einheit nach Anspruch 12 oder 13, **dadurch gekennzeichnet, dass** die erste Einheit (2) zur Energieversorgung einen Energiespeicher (63), insbesondere eine wiederaufladbare Batterie, und/oder ein Solarmodul aufweist.

15. Heimautomatisierungsanordnung zur Durchführung eines Verfahrens nach einem der Ansprüche 1 bis 11 und/oder mit einer ersten Einheit (2), einer zweiten Einheit (3) und einer dritten Einheit (4), wobei die erste Einheit (2) nach einem der Ansprüche 12 bis 14 ausgebildet ist.
